# EUROPÄISCHE PATENTSCHRIFT

(11) **EP 3 239 559 B1**
(45) Veröffentlichungstag und Bekanntmachung des Hinweises auf die Patenterteilung: **29.01.2020**
(21) Anmeldenummer: 17165240.7
(22) Anmeldetag: 06.04.2017
(51) Int. Cl.: B60K 6/387, B60K 6/547, F16H 47/02

(54) **GETRIEBE FÜR EINE FAHRBARE ARBEITSMASCHINE SOWIE ANTRIEBSEINHEIT**
TRANSMISSION FOR A MOBILE WORK MACHINE AND DRIVE UNIT
ENTRAÎNEMENT POUR UNE MACHINE DE TRAVAIL AUTOMOBILE ET UNITÉ D'ENTRAÎNEMENT

(30) Priorität: 28.04.2016 DE 102016107941
(43) Veröffentlichungstag der Anmeldung: 01.11.2017
(73) Patentinhaber: Max Holder GmbH, 72555 Metzingen (DE)
(72) Erfinder: POHL, Johannes, 72072 Tübingen (DE); GÖNNINGER, Simon, 72555 Metzingen (DE); BRAUN, Fritz, 72127 Kusterdingen (DE); MAYER, Christian, 72768 Reutlingen (DE)
(74) Vertreter: Kohler Schmid Möbus Patentanwälte

(56) Entgegenhaltungen:
- AT-B1- 512 975
- DE-A1-102010 030 569
- DE-A1-102013 215 114
- US-A1- 2006 142 104

## Beschreibung

Die Erfindung betrifft ein Getriebe für eine fahrbare Arbeitsmaschine mit den Merkmalen des Oberbegriffs des Patentanspruchs 1.

Derartige fahrbare Arbeitsmaschinen sind beispielsweise als forst-, landwirtschaftliche oder Kommunalfahrzeuge im Einsatz. Durch geeignete Anbauten können unterschiedlichste Arbeitsaufgaben erledigt werden. Dabei werden derartige Arbeitsmaschinen in einem Arbeitsbetriebsmodus, in dem Arbeitsaufgaben wie z. B. Mähen bewältigt werden, in der Regel bei niedrigen Geschwindigkeiten, beispielsweise < 26 km/h gefahren. Bei An- und Abfahrten, Transporten oder dergleichen, d. h. in einem Fahrbetriebsmodus, werden die Arbeitsmaschinen häufig mit höherer Geschwindigkeit gefahren.

Aus dem Stand der Technik sind fahrbare Arbeitsmaschinen mit Hybridantrieb, d. h. mit mehreren Antriebsarten, beispielsweise einer herkömmlichen Verbrennungskraftmaschine, beispielsweise einem Dieselmotor, und einem hydrostatischen Antrieb, bekannt. Durch den hydrostatischen Antrieb lässt sich die Geschwindigkeit der Arbeitsmaschine stufenlos regeln. Auch lassen sich bei niedrigen Drehzahlen hohe Drehmomente erzielen. Daher wird die Arbeitsmaschine im Arbeitsbetriebsmodus in der Regel hydrostatisch angetrieben. Jedoch sinkt der Wirkungsgrad eines hydrostatischen Antriebs mit steigender Geschwindigkeit. Für Fahrten bei höheren Geschwindigkeiten, insbesondere in dem Fahrbetriebsmodus, bietet daher ein mechanischer Direktantrieb mittels der Verbrennungskraftmaschine eine höhere Effizienz.

Um jedoch einen Antrieb mit mehreren Antriebsarten zu ermöglichen, bedarf es eines geeigneten Getriebes.

In der AT 512 975 B1 wird dazu ein hydromechanisches Synchrongetriebe vorgeschlagen. Das vorgeschlagene Getriebe ermöglicht einen Direktantrieb über einen Antriebsmotor als auch in einem alternativen Betriebsmodus einen Antrieb über einen Hydromotor. Der Hydromotor wird dabei über eine Hydraulikpumpe gespeist, die durch den Antriebsmotor angetrieben wird. Während eines solchen hydrostatischen Antriebs ist es möglich, ein durch das Getriebe angetriebenes Fahrzeug ohne mechanische Schaltstufen stufenlos in der Geschwindigkeit zu regeln. Nachteilig dabei ist jedoch, dass während einer Fahrt nicht zwischen den beiden Antriebsarten kraftunterbrechungsfrei gewechselt werden kann.

Der Erfindung liegt daher die Aufgabe zugrunde, ein Getriebe für eine fahrbare Arbeitsmaschine derart weiterzubilden, das es auf einfache Weise ermöglicht, während einer Fahrt mit einer fahrbaren Arbeitsmaschine zwischen verschiedenen Antriebsarten umzuschalten.

Gelöst wird diese Aufgabe auf überraschende und einfache Weise erfindungsgemäß durch ein Getriebe für eine fahrbare Arbeitsmaschine, mit
a. einem ersten Antrieb zur Kopplung mit einer ersten Antriebsquelle,
b. einem zweiten Antrieb zur Kopplung mit einer zweiten Antriebsquelle,
c. einem ersten Abtrieb zur Kopplung mit einer oder mehreren Radachsen und/oder Rädern, wobei das Getriebe
d. eine erste Schaltstufenwelle, die mit dem ersten Antrieb und dem ersten Abtrieb kraftschlüssig verbindbar ist, und
e. eine zweite Schaltstufenwelle, die wahlweise und unabhängig von der ersten Schaltstufenwelle mit dem ersten Antrieb oder mit dem zweiten Antrieb sowie mit dem ersten Abtrieb kraftschlüssig verbindbar ist, aufweist.

Somit ist es möglich, das Getriebe über den ersten Antrieb an eine erste Antriebsquelle, beispielsweise eine Verbrennungskraftmaschine, zu koppeln. Das Getriebe kann über den zweiten Antrieb mit einer zweiten Antriebsquelle gekoppelt werden, beispielsweise einem Hydromotor oder einem Elektromotor. Der erste Abtrieb kann mit Radachsen einer fahrbaren Arbeitsmaschine gekoppelt werden. Für Fahrten mit der fahrbaren Arbeitsmaschine, insbesondere bei höheren Geschwindigkeiten, mit anderen Worten in einem Fahrbetriebsmodus der fahrbaren Arbeitsmaschine, kann vorzugsweise der erste Antrieb genutzt werden. Über die erste Schaltstufenwelle als auch über die zweite Schaltstufenwelle kann dann eine geeignete Schaltstufe für Fahrten im Fahrbetriebsmodus gewählt werden.

Die fahrbare Arbeitsmaschine kann auch in einem Arbeitsbetriebsmodus genutzt werden. Dazu kann die fahrbare Arbeitsmaschine vorzugsweise über den zweiten Antrieb angetrieben werden. In diesem Betriebsmodus ist es möglich, zwischen Schaltstufen der zweiten Schaltstufenwelle zu wählen.

Auch ist es möglich, während einer Fahrt, d. h. ohne Stillstand der fahrbaren Arbeitsmaschine, zwischen den Betriebsmodi zu wechseln. Der Wechsel kann insbesondere kraftunterbrechungsfrei erfolgen.

Soll beispielsweise vom Fahrbetriebsmodus in den Arbeitsbetriebsmodus gewechselt werden, so kann zunächst die fahrbare Arbeitsmaschine über den ersten Antrieb in einer der ersten Schaltstufenwelle zugeordneten Schaltstufe gefahren werden. Währenddessen kann die zweite Schaltstufenwelle mit dem zweiten Antrieb kraftschlüssig verbunden werden. Der zunächst bestehende Kraftschluss der ersten Antriebsquelle über die erste Schaltstufenwelle zu den Radachsen kann dann auf die zweite Schaltstufenwelle umgeschaltet werden. Somit wird der Antrieb von der ersten Antriebsquelle auf die zweite Antriebsquelle umgeschaltet. Die fahrbare Arbeitsmaschine kann nun im Arbeitsbetriebsmodus genutzt werden. Das Getriebe kann demnach nach Art eines Doppelkupplungsgetriebes aufgebaut sein, insbesondere kann an jeder Schaltstufenwelle jeweils eine Kupplung angeordnet sein.

Das erfindungsgemäße Getriebe ist unabhängig von den verwendeten Antriebsquellen. Insbesondere kann das Getriebe mit unterschiedlichen Antriebsquellen betrieben bzw. verbunden werden. Zur Anpassung an unterschiedliche Drehzahlbereiche unterschiedlicher Antriebsquellen können Modulationseinheiten zwischen die Antriebsquellen und das Getriebe geschaltet werden.

Besonders bevorzugt ist es, wenn der erste Abtrieb sowohl mit der ersten als auch mit der zweiten Schaltstufenwelle direkt koppelbar ist, mit anderen Worten diese drei Elemente ein- oder mehrstufige Getriebe bilden.

Vorteilhaft ist es insbesondere, wenn die erste und die zweite Schaltstufenwelle gleich viele, insbesondere jeweils zwei, Schaltstufen aufweisen. Somit kann die fahrbare Arbeitsmaschine über den ersten Antrieb in vier Schaltstufen betrieben werden und über den zweiten Antrieb zumindest über zwei Schaltstufen betrieben werden.
Auch kann vorgesehen sein, dass das Getriebe einen zweiten Abtrieb aufweist. An den zweiten Abtrieb kann beispielsweise eine Generatoreinheit angeschlossen werden, über die wiederum die zweite Antriebsquelle gespeist werden kann. Ist beispielsweise die Generatoreinheit eine Hydropumpe, so kann ein Hydromotor als Antriebsquelle durch diese gespeist werden. Somit können Vorteile eines hydrostatischen Antriebs, beispielsweise eine stufenlose Geschwindigkeitsregelung sowie eine hohe Zugkraft der fahrbaren Arbeitsmaschine, insbesondere für den Arbeitsbetriebsmodus genutzt werden.

Die Generatoreinheit kann auch als elektrischer Generator ausgebildet sein. Als zweite Antriebsquelle kann dann ein durch diesen gespeister Elektromotor vorgesehen sein.

Auch kann es vorgesehen sein, dass der erste Antrieb und/oder der zweite Antrieb eine Antriebsquellenabschaltung aufweist. Eine Antriebsquellenabschaltung kann nach Art einer Kupplung gebildet sein. Dadurch wird es möglich, den ersten bzw. den zweiten Antrieb von der ersten bzw. der zweiten Antriebsquelle zu trennen und die fahrbare Arbeitsmaschine ausschließlich mit der jeweils anderen Antriebsquelle anzutreiben.

Vorteilhaft ist ferner, wenn das Getriebe eine Zapfwelle aufweist, die mit dem ersten Antrieb verbunden ist oder an diesen koppelbar ist. Über eine solche Zapfwelle können Zusatzgeräte, die an der fahrbaren Arbeitsmaschine anbaubar sind, angetrieben werden. Somit können mit der fahrbaren Arbeitsmaschine vielfältige Arbeitsaufgaben bewältigt werden.

Besonders bevorzugt ist es, wenn das Getriebe ein Getriebegehäuse mit einer Befestigungsstelle, insbesondere Anflanschstelle, für die zweite Antriebsquelle und/oder mit einer Befestigungsstelle, insbesondere Anflanschstelle, für eine Generatoreinheit aufweist. Dadurch wird es möglich, beispielsweise an dem zweiten Antrieb eine zweite Antriebsquelle anzuflanschen. Auch erleichtert dies einen Wechsel der zweiten Antriebsquelle, beispielsweise um von einem hydrostatischen Antrieb zu einem elektrischen Antrieb oder umgekehrt zu wechseln. Somit wird es möglich, einen hochflexiblen Hybridantrieb auf Basis unterschiedlicher Energieformen zu realisieren. Die Anflanschstellen ermöglichen es beispielsweise, an den zweiten Abtrieb zunächst eine Hydropumpe anzuflanschen und an den zweiten Antrieb einen Hydromotor anzuflanschen. Zu einem späteren Zeitpunkt können beispielsweise aus umweit- oder wirtschaftlichen Überlegungen heraus die Hydropumpe und der Hydromotor einfach entfernt werden und durch einen Elektromotor, der im Bereich des zweiten Antriebs angeflanscht wird, ausgetauscht werden. Im Bereich des zweiten Abtriebs kann ein elektrischer Generator angeflanscht werden. Auf analoge Weise können auch Generatoren oder Motoren mit anderen Leistungskennwerten, beispielsweise für spezifische Arbeitsaufgaben, zum Einsatz kommen, ohne dass das Getriebe gewechselt werden muss. Da die Befestigungsstellen außen am Getriebegehäuse vorgesehen sind, kann das Getriebe besonders kompakt aufgebaut werden.

In den Rahmen der Erfindung fällt auch eine Antriebseinheit für eine fahrbare Arbeitsmaschine, wobei die Antriebseinheit ein Getriebe gemäß der Erfindung aufweist

Dabei kann es vorgesehen sein, dass an den zweiten Abtrieb eine Generatoreinheit, insbesondere eine Hydraulikpumpe oder ein elektrischer Generator, gekoppelt ist.

An den ersten Antrieb als erste Antriebsquelle und/oder den zweiten Antrieb als zweite Antriebsquelle kann eine Verbrennungskraftmaschine, vorzugsweise ein Diesel-, Benzin- oder Gasmotor, ein Elektromotor oder ein Hydromotor gekoppelt sein.

Somit kann die Antriebseinheit mit unterschiedlichsten Energieträgern betrieben werden.

Besonders vorteilhaft ist es, wenn die Generatoreinheit, die erste Antriebsquelle und/oder die zweite Antriebsquelle über eine Modulationseinheit an den zweiten Abtrieb, den ersten Antrieb bzw. den zweiten Antrieb gekoppelt ist. Durch die Modulationseinheit kann eine Drehzahlanpassung durchgeführt werden. Je nach Art der jeweiligen Generatoreinheit oder der jeweiligen Antriebsquelle können diese somit in unterschiedlichen Drehzahlbereichen betrieben werden, um anforderungsspezifische Drehmomente und/oder Leistungen bereitstellen zu können. Durch eine Modulationseinheit, beispielsweise ein auf die jeweilige Generatoreinheit bzw. Antriebsquelle spezifisch angepasstes Übersetzungsgetriebe, können somit Kennwerte für die An- bzw. Abtriebe spezifisch angepasst werden. Das Getriebe gemäß der Erfindung kann somit noch flexibler, insbesondere für unterschiedlichste Arten von Generatoreinheiten und Antriebsquellen genutzt werden, ohne dass es Veränderungen am Getriebe selbst bedarf.

Vorteilhaft ist ferner, wenn der erste Antrieb und/oder der erste Abtrieb und/oder die Zapfwelle eine Knickachse aufweisen. Somit kann die fahrbare Arbeitsmaschine ein Knickgelenk, beispielsweise in einem mittleren Bereich des Fahrzeugs, aufweisen, sodass das Fahrzeug insgesamt wendiger und flexibler handhabbar wird.

Ein an- und abschaltbarer Allradantrieb lässt sich auf einfache Weise realisieren, wenn der erste Abtrieb umschaltbar mit einer Radachse oder mit wenigstens zwei Radachsen gekoppelt ist.

Weist die Antriebseinheit eine Steuereinheit auf, die eingerichtet ist, in Abhängigkeit eines Betriebsmodus der Antriebseinheit und/oder der Fahrgeschwindigkeit und/oder einer Drehzahl und/oder eines am ersten und/oder am zweiten Antrieb angreifenden Drehmoments eine Schaltstufe der ersten oder der zweiten Schaltstufenwelle zu wählen, so lässt sich auf einfache Weise ein automatisch oder halbautomatisch schaltendes Getriebe realisieren. Insbesondere kann das Getriebe, beispielsweise last- und/oder geschwindigkeitsabhängig, Schaltstufen gemäß einer Schaltstrategie auswählen. Dadurch kann der Fahrkomfort der fahrbaren Arbeitsmaschine verbessert und deren Benutzung erleichtert werden.

Besonders bevorzugt ist es ferner, wenn die erste Antriebsquelle und/oder die zweite Antriebsquelle als Elektromotor ausgebildet ist/sind, wobei der Elektromotor zumindest teilweise durch einen Akkumulator gespeist werden kann. Der Akkumulator kann dazu von einem elektrischen Generator gespeist bzw. geladen werden. Der Akkumulator kann als Brennstoffzelle ausgebildet sein.

Es kann vorgesehen sein, dass der elektrische Generator sowohl den Akkumulator speist als auch direkt den oder die Elektromotor/en antreibt. Der elektrische Generator kann beispielsweise von einer Verbrennungskraftmaschine angetrieben werden. Somit lässt sich mit der Antriebseinheit gemäß der Erfindung eine Vielzahl von Antriebsquellen kombinieren. Insbesondere lassen sich serielle (Range Extender), parallele, Voll- und Mild- und selbst Elektro-/Elektro- sowie Elektro-/Hydro-Hybridantriebe, realisieren, ohne dass grundlegende Änderungen an der Antriebseinheit erforderlich wären.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und werden in der nachfolgenden Beschreibung näher erläutert.

Es zeigen:
- Fig. 1: eine schematische Darstellung einer fahrbaren Arbeitsmaschine;
- Fig. 2: eine schematische, perspektivische Darstellung ausgewählter Komponenten einer Antriebseinheit in einer ersten Ausführung der Erfindung mit hydrostatischem Antrieb;
- Fig. 3: eine zu Fig. 2 analoge schematische Darstellung einer weiteren Ausführung einer Antriebseinheit mit elektrischem Antrieb;
- Fig. 4: eine Schemadarstellung des Getriebes bzw. der Antriebseinheit gemäß der Fig. 2.

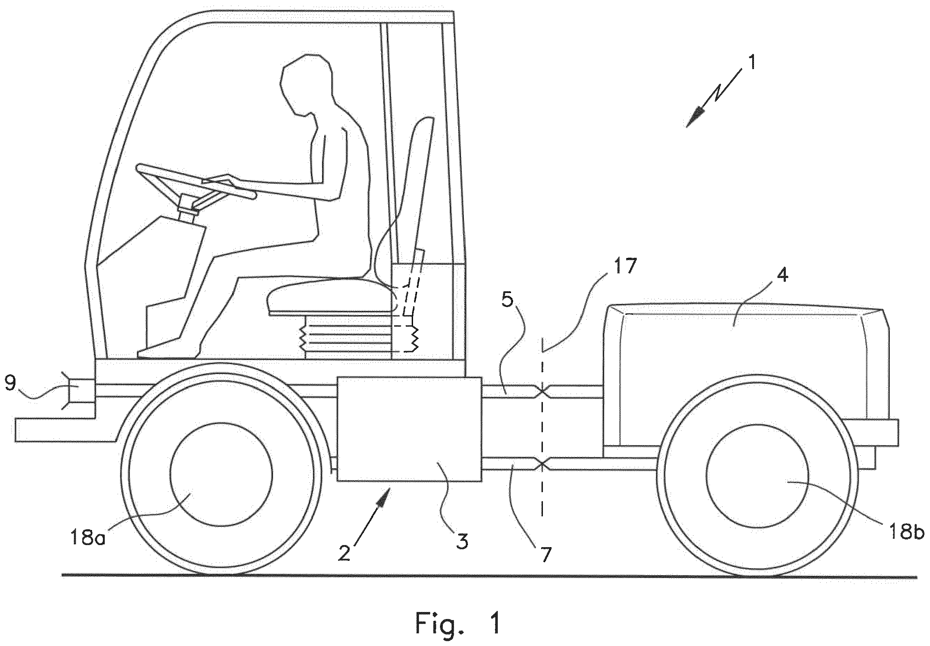

Die Fig. 1 zeigt ein erstes Ausführungsbeispiel einer fahrbaren Arbeitsmaschine 1 mit einer Antriebseinheit 2, die ein Getriebe 3 aufweist. Das Getriebe 3 ist mit einer als Verbrennungskraftmotor, beispielsweise Dieselmotor, ausgebildeten ersten Antriebsquelle 4 über einen ersten Antrieb 5 gekoppelt. Über einen ersten Abtrieb 7 treibt das Getriebe 3 Radachsen 18a, 18b der fahrbaren Arbeitsmaschine 1 an. Der erste Antrieb 5 sowie der erste Abtrieb 7 weisen eine Knickachse 17 auf. Somit kann die fahrbare Arbeitsmaschine 1 entlang der Knickachse 17 abknicken. Dadurch kann die fahrbare Arbeitsmaschine 1 engere Wendekreise erzielen. Ferner ist der Fig. 1 noch entnehmbar, dass aus dem Getriebe 3 eine Zapfwelle 9 herausgeführt ist, die bis zu einer Frontseite der fahrbaren Arbeitsmaschine 1 reicht. Eine solche Zapfwelle wird üblicherweise auch als Nebenabtrieb oder PTO (Power-Take Off) bezeichnet. In alternativen Ausführungsformen reicht die Zapfwelle 9 auch bis zu einer Rückseite der fahrbaren Arbeitsmaschine 1, um dort Anbaukomponenten antreiben zu können.

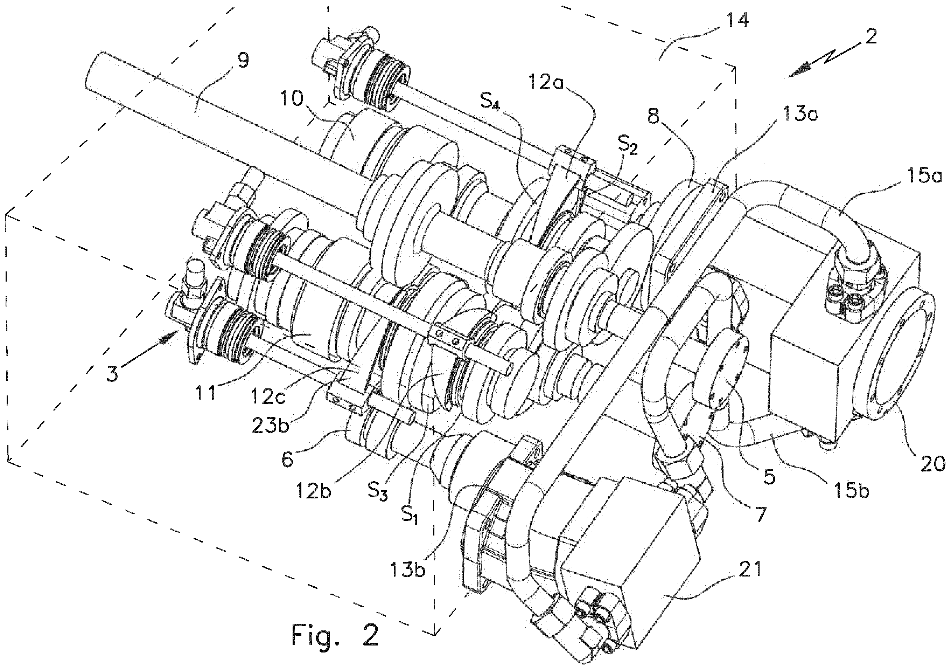

Die Fig. 2 zeigt die Antriebseinheit 2 in perspektivischer Darstellung. In einem Getriebegehäuse 14 ist ein Getriebe 3 mit einer ersten Schaltstufenwelle 10 sowie einer zweiten Schaltstufenwelle 11 angeordnet. Oberhalb der beiden Schaltstufenwellen 10, 11 ist der erste Antrieb 5 angeordnet, der direkt mit der Zapfwelle 9, in diesem Ausführungsbeispiel einstückig, verbunden ist. Unterhalb der Schaltstufenwellen 10, 11 ist der erste Abtrieb 7 angeordnet und kraftschlüssig mit diesen verbunden. Die Schaltstufenwellen 10, 11 weisen gleich viele Schaltstufen auf, im gezeigten Ausführungsbeispiel jeweils zwei. Somit bilden die erste Schaltstufenwelle 10 und die zweite Schaltstufenwelle 11 sowie der erste Abtrieb 7 ein Übersetzungsgetriebe mit vier unabhängigen Gängen bzw. Schaltstufen.

Zu erkennen sind ferner drei Schaltgabeln 12a, 12b, 12c. Mit der Schaltgabel 12a kann zwischen zwei Schaltstellungen S2, S4 der ersten Schaltstufenwelle 10 umgeschaltet werden bzw. diese ausgewählt werden. Mit der Schaltgabel 12b kann zwischen zwei Schaltstufen S1, S3 der zweiten Schaltstufenwelle 11 gewählt bzw. umgeschaltet werden. Mittels der Schaltgabel 12c kann ein zweiter Antrieb 6 auf die zweite Schaltstufenwelle 11 geschaltet bzw. mit dieser gekoppelt oder entkoppelt werden. Somit bildet die Schaltgabel 12c gleichzeitig eine Antriebsquellenabschaltung 23b. Ferner ist noch ein zweiter Abtrieb 8 der Fig. 2 entnehmbar, mit dem Leistung vom ersten Antrieb 5 abgezweigt werden kann.

Am Getriebegehäuse 14 sind ferner zwei als Anflanschstellen 13a, 13b ausgebildete Befestigungsstellen vorgesehen. An der Anflanschstelle 13a ist eine Generatoreinheit 20 angeflanscht, die mit dem zweiten Abtrieb 8 gekoppelt ist. An der Anflanschstelle 13b ist eine zweite Antriebsquelle 21 angeflanscht, die mit dem zweiten Antrieb 6 gekoppelt ist. In diesem Ausführungsbeispiel ist die Generatoreinheit 20 als Hydraulikpumpe ausgeführt, die regelbar, insbesondere als Schrägscheibenpumpe, ausgebildet ist. Die zweite Antriebsquelle 21 ist in diesem Ausführungsbeispiel als Hydromotor, z. B. als Schrägachsenmotor, ausgeführt. Über Hydraulikleitungen 15a, 15b ist die Generatoreinheit 20, d. h. die Hydraulikpumpe, mit der zweiten Antriebsquelle 21, d. h. dem Hydromotor, hydraulisch verbunden. Somit kann die Generatoreinheit 20 mittels des zweiten Abtriebs 8 angetrieben werden, Leistung aufnehmen und der zweiten Antriebsquelle 21 hydraulisch zur Verfügung stellen. Die zweite Antriebsquelle 21 wiederum kann den zweiten Antrieb 6 hydrostatisch antreiben. Die Generatoreinheit 20 sowie die zweite Antriebquelle 21 bilden somit ein stufenloses, hydraulisches Getriebe.

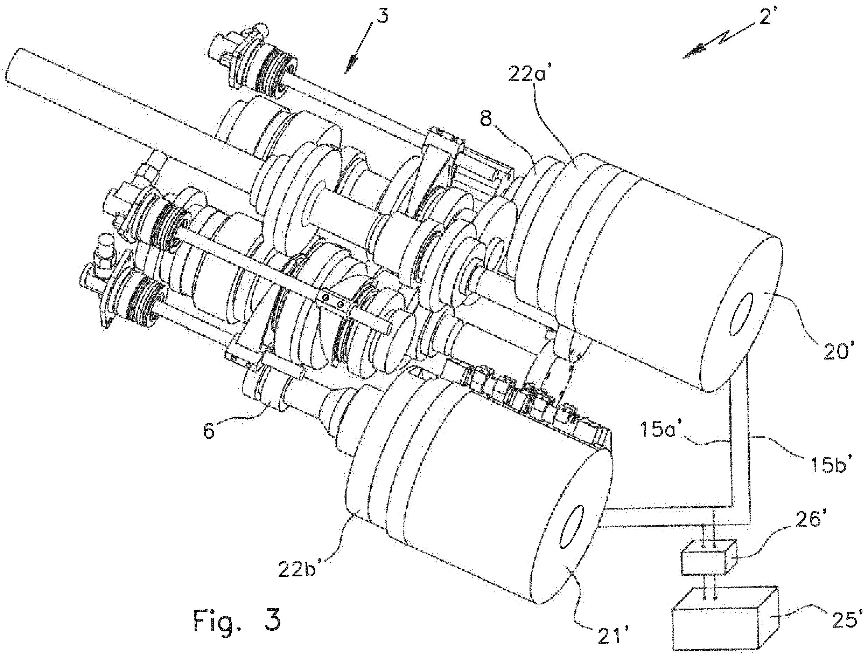

Die Fig. 3 zeigt nun eine alternative Ausführung der Erfindung mit dem Getriebe 3 der Fig. 2. Zu erkennen ist, dass sich eine Antriebseinheit 2' im Wesentlichen von der Antriebseinheit 2 der Fig. 2 darin unterscheidet, dass eine Generatoreinheit 20' in diesem Ausführungsbeispiel als elektrischer Generator ausgeführt ist. Eine zweite Antriebsquelle 21' ist in diesem Ausführungsbeispiel als Elektromotor ausgeführt. Analog zum Ausführungsbeispiel der Fig. 2 wird die Generatoreinheit 20' durch den zweiten Abtrieb 8 angetrieben. Zu erkennen ist jedoch, dass der zweite Abtrieb 8 nicht direkt auf die Generatoreinheit 20' geführt ist. Vielmehr ist zwischen den zweiten Abtrieb 8 und die Generatoreinheit 20' eine Modulationseinheit 22a' zwischengeschaltet. Diese dient zur Anpassung der Drehzahlen des zweiten Abtriebs 8 an die Erfordernisse der Generatoreinheit 20'.

Die Modulationseinheit 22a' ist als Übersetzungsgetriebe ausgebildet, das in diesem Fall zur Wirkungsgradsteigerung des elektrischen Generators bzw. der Generatoreinheit 20' drehzahlerhöhend ausgelegt ist. In einer alternativen Ausführungsform ist die Modulationseinheit 22a' als Planetengetriebe ausgebildet.

Desgleichen erkennt man, dass in diesem Ausführungsbeispiel zwischen die zweite Antriebsquelle 21' und den zweiten Antrieb 6 eine weitere Modulationseinheit 22b' zwischengeschaltet ist. Diese dient zur Anpassung der von der zweiten Antriebsquelle 21' bereitgestellten höheren Drehzahlen an den für einen normalen Betrieb vorgesehenen Drehzahlbereich des zweiten Antriebs 6.

Die Generatoreinheit 20' und die zweite Antriebsquelle 21' sind über elektrische Leitungen 15a', 15b' miteinander verbunden. Somit kann die Generatoreinheit 20' die zweite Antriebsquelle 21', d. h. den Elektromotor, speisen. Auch wird erkennbar, dass durch den Einsatz der Modulationseinheiten 22a', 22b' das gleiche Getriebe 3 auch für unterschiedliche Arten von Generatoreinheiten 20, 20' bzw. zweiten Antriebsquellen 21, 21' genutzt werden kann.

Über die elektrischen Leitungen 15a', 15b' ist ferner ein Akkumulator 25' mit einer Lade-/Entladesteuerung 26' an die Generatoreinheit 20' sowie an die zweite Antriebsquelle 21' angeschlossen. Die Lade-/Entladesteuerung 26' fungiert im Wesentlichen als Gleich- bzw. Wechselrichter. Somit kann der Akkumulator 25' bei Bedarf von der Generatoreinheit 20' geladen werden sowie je nach Bedarf die zweite Antriebsquelle 21' parallel oder alternativ zur Generatoreinheit 20' versorgen.

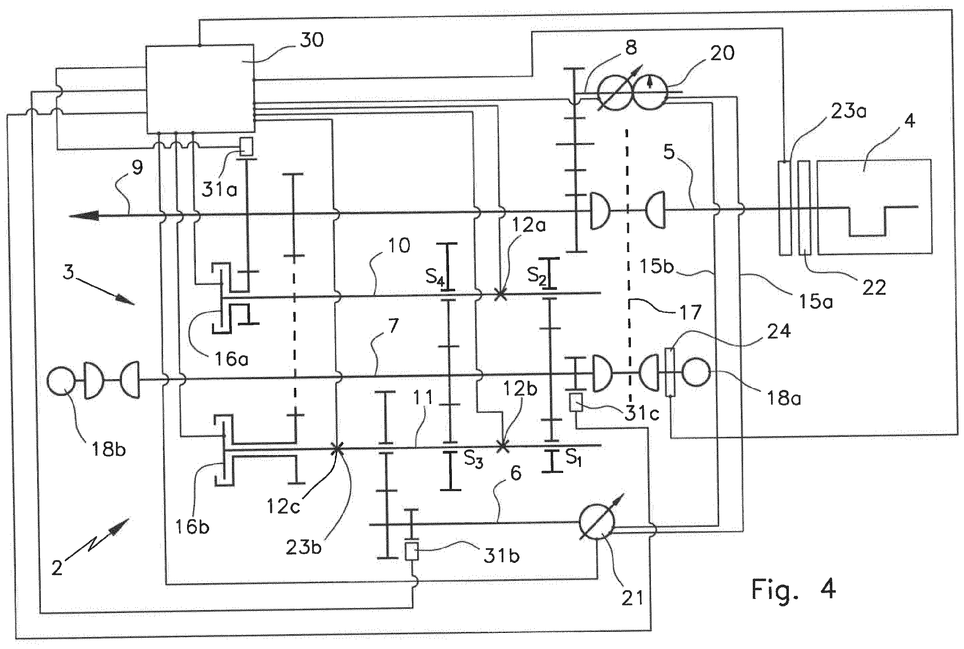

Die Fig. 4 zeigt nun die Antriebseinheit 2 bzw. das Getriebe 3 der Fig. 2 in schematischer Darstellung. Zu erkennen ist, dass die erste Antriebsquelle 4 über eine Modulationseinheit 22 und eine als Kupplung ausgebildete Antriebsquellenabschaltung 23a den ersten Antrieb 5 antreibt.

Die Modulationseinheit 22 ist als Übersetzungsgetriebe ausgebildet, sodass die erste Antriebsquelle 4, d. h. die Verbrennungskraftmaschine, in einem für diese angepassten energiesparenden Drehzahlbereich betrieben werden kann.

Der erste Antrieb 5 ist mit der Zapfwelle 9 direkt verbunden. Vom ersten Antrieb 5 zweigt der zweite Abtrieb 8 ab. Der zweite Abtrieb 8 ist mit der Generatoreinheit 20 verbunden.

Über eine Kupplung 16a ist der erste Antrieb 5 mit der ersten Schaltstufenwelle 10 koppelbar. Ebenso kann mittels einer Kupplung 16b der erste Antrieb 5 mit der zweiten Schaltstufenwelle 11 gekoppelt werden. Mittels der Schaltgabel 12a bzw. der Schaltgabel 12b kann zwischen den zwei Schaltstufen S2, S4 der ersten Schaltstufenwelle 10 bzw. den Schaltstufen S1, S3 der zweiten Schaltstufenwelle 11 gewechselt bzw. diese gewählt werden. Somit kann über den ersten Antrieb 5 über vier verschiedene Übersetzungsverhältnisse bzw.
Schaltstufen S1, S2, S3, S4 der erste Abtrieb 7, an dem
Radachsen 18a, 18b der fahrbaren Arbeitsmaschine 1 angeschlossen sind, angetrieben werden.

Somit ist es beispielsweise möglich, in einem Fahrbetriebsmodus die Arbeitsmaschine 1 (Fig. 1) mit Hilfe der ersten Antriebsquelle 4, d. h. der Verbrennungskraftmaschine, ohne Zwischenschaltung der zweiten Antriebsquelle 21, d. h. des Hydromotors, anzutreiben.

Zwischen der Radachse 18a und dem ersten Abtrieb 7 ist eine als Kupplung ausgebildete Allradanschaltung 24 angeordnet, mit der zwischen ein- und zweiachsigem Antrieb umgeschaltet werden kann.

Weiterhin ist zu erkennen, dass die zweite Antriebsquelle 21 mit dem zweiten Antrieb 6 verbunden ist und dieser wiederum mit Hilfe der Schaltgabel 12c bzw. der Antriebsquellenabschaltung 23b auf die zweite Schaltstufenwelle 11 geschaltet werden kann. Der erste Abtrieb 7 kann somit beispielsweise in einem Arbeitsbetriebsmodus, in dem die fahrbare Arbeitsmaschine 1 hydrostatisch angetrieben werden soll, einerseits durch Steuerung der zweiten Antriebsquelle 21 als auch durch Wahl einer der beiden Schaltstufen S1, S3 zur Realisierung unterschiedlicher Drehmomente oder -geschwindigkeiten angetrieben werden. Dem ersten Antrieb 5 sind somit beide Schaltstufenwellen 10, 11 und alle Schaltstufen S1, S2, S3, S4 zugeordnet, während dem zweiten Antrieb 6 nur die zweite Schaltstufenwelle 11 und somit zwei Schaltstufen S1, S3 zugeordnet sind.

Eine Steuereinheit 30 ist mit allen steuerbaren Elementen der Antriebseinheit 2, insbesondere mit den Schaltgabeln 12a, 12b, 12c bzw. der Antriebsquellenabschaltung 23b, den beiden Kupplungen 16a, 16b, der Antriebsquellenabschaltung 23a, der Allradanschaltung 24 sowie mit Steuereingängen der Generatoreinheit 20 und der zweiten Antriebsquelle 21 verbunden. Die Steuereinheit 30 ist eingerichtet, je nach Betriebsmodus die an die Steuereinheit 30 angeschlossenen Elemente zu steuern. Insbesondere ist der Fig. 4 entnehmbar, dass die Steuereinheit 30 jeweils separat mit den Kupplungen 16a, 16b verbunden ist. Mit anderen Worten sind die Kupplungen 16a, 16b voneinander unabhängig steuerbar. Für diese Steuerungsaufgaben ist die Steuereinheit 30 ferner mit Sensoren 31a - 31c verbunden, die der Steuereinheit 30 steuerungsrelevante Daten, insbesondere Drehmomente und Drehgeschwindigkeiten, beispielsweise der Antriebe 5, 6 und des Abtriebs 7 liefern. Die Steuereinheit 30 ist insbesondere eingerichtet, in dem Arbeitsbetriebsmodus die Antriebsquellenabschaltung 23a zu deaktivieren, d. h. die erste Antriebsquelle 4 mit dem ersten Antrieb 5 zu verbinden. Somit treibt die erste Antriebsquelle 4 ausschließlich die Zapfwelle 9 an. Die Drehzahl der ersten Antriebsquelle 4 kann somit auf die Erfordernisse eines an der Zapfwelle 9 angeschlossenen Geräts angepasst und beispielsweise auf 1.000 U/min justiert werden. Gleichzeitig sind in diesem Betriebsmodus die Kupplungen 16a, 16b zunächst freilaufend geschaltet.

Mittels der Schaltgabel 12c bzw. der Antriebsquellenabschaltung 23b ist die zweite Schaltstufenwelle 11 über den zweiten Antrieb 6 mit der zweiten Antriebsquelle 21 verbunden. Je nach Wunsch eines Benutzers bzw. Geschwindigkeit der fahrbaren Arbeitsmaschine 1 ist mittels der Schaltgabel 12b eine der beiden Schaltstufen S1 oder S3, beispielsweise die Schaltstufe S1, ausgewählt. Somit treibt die zweite Antriebsquelle 21 über den ersten Abtrieb 7 die Radachsen 18a, 18b an.

Um nun vom Arbeitsbetriebsmodus in den Fahrbetriebsmodus kraftunterbrechungsfrei zu wechseln, kann die Steuereinheit 30 nach Art eines durch die erste Schaltstufenwelle 10 und die zweite Schaltstufenwelle 11 sowie die Kupplungen 16a, 16b gebildeten Doppelkupplungsgetriebes das Getriebe 3 umschalten. Die Steuereinheit 30 kann zunächst eine Schaltstufe S2 oder S4, beispielsweise Schaltstufe S2, mittels der Schaltgabel 12a auswählen und sodann mittels der Kupplungen 16a, 16b den ersten Antrieb 5 über die erste Schaltstufenwelle 10 auf den ersten Abtrieb 7 kuppeln und, insbesondere zur Reduktion von Energieverlusten, mittels der Schaltgabel 12c bzw. der Antriebsquellenabschaltung 23b den zweiten Antrieb 6 von der zweiten Schaltstufenwelle 11 abkoppeln. Dadurch erfolgt dieser Schaltstufenwechsel kraftunterbrechungsfrei.

Das vorstehend Beschriebene mit anderen Worten - zusammenfassend - und dementsprechend auch der Fig. 4 entnehmbar - ist die erste Schaltstufenwelle 10 mit dem ersten Antrieb 5 und dem ersten Abtrieb 7 kraftschlüssig verbindbar. Des Weiteren ist die zweite Schaltstufenwelle 11 wahlweise und unabhängig von der ersten Schaltstufenwelle 10 mit dem ersten Antrieb 5 oder mit dem zweiten Antrieb 6 sowie mit dem ersten Abtrieb 7 kraftschlüssig verbindbar und somit insbesondere auch abkoppelbar.
Somit kann auf einfache Weise zwischen Betriebsmodi auch während einer Fahrt der fahrbaren Arbeitsmaschine 1 gewechselt werden.

Um innerhalb einer der beiden Schaltstufenwellen 10, 11 eine Schaltstufe ebenfalls kraftunterbrechungsfrei zu wechseln, steuert in diesem Ausführungsbeispiel die Steuereinheit 30 kurzzeitig zunächst eine Schaltstufe der jeweils anderen Schaltstufenwelle 10, 11 an, wählt die gewünschte Schaltstufe vor und schaltet sodann wieder auf die anfängliche Schaltstufenwelle 10, 11 zurück.

Es ist vorgesehen, dass die Steuereinheit 30 zur vollautomatischen Steuerung des Getriebes 3 gemäß voreingestellter Schaltstrategien Schaltstufen und Antriebsquellen auswählt. Insbesondere sieht eine Schaltstrategie vor, in Schaltstufe S1 mittels der zweiten Antriebsquelle 21 und somit hydraulisch und stufenlos anzufahren und sodann mit steigender Geschwindigkeit zunächst auf die erste Antriebsquelle 4 zu wechseln und bei weiter steigender Geschwindigkeit nacheinander in die Schaltstufen S2, S3 und S4 jeweils kraftunterbrechungsfrei zu wechseln.

Damit stehen ein hochflexibles, vielfältig einsetzbares und konstruktiv einfach aufgebautes Getriebe sowie eine hiermit ausgestattete Antriebseinheit insbesondere zur Nutzung in der fahrbaren Arbeitsmaschine 1 und insbesondere für einen hybriden Antrieb zur Verfügung.

### Bezugszeichenliste:

- 1: Arbeitsmaschine
- 2, 2': Antriebseinheit
- 3: Getriebe
- 4: erste Antriebsquelle
- 5: erster Antrieb
- 6: zweiter Antrieb
- 7: erster Abtrieb
- 8: zweiter Abtrieb
- 9: Zapfwelle
- 10: erste Schaltstufenwelle
- 11: zweite Schaltstufenwelle
- 12a - 12c: Schaltgabel
- 13a, 13b: Anflanschstelle
- 14: Getriebegehäuse
- 15a, 15b: Hydraulikleitung
- 15a', 15b': elektrische Leitung
- 16a, 16b: Kupplung
- 17: Knickachse
- 18a, 18b: Radachse
- 20, 20': Generatoreinheit
- 21, 21': zweite Antriebsquelle
- 22, 22a', 22b': Modulationseinheit
- 23a, 23b: Antriebsquellenabschaltung
- 24: Allradanschaltung
- 25': Akkumulator
- 26': Lade-/Entladesteuerung
- 30: Steuereinheit
- 31a - 31c: Sensor
- S1 - S4: Schaltstufe

## Patentansprüche

1. Getriebe (3) für eine fahrbare Arbeitsmaschine (1), mit:
a. einem ersten Antrieb (5) zur Kopplung mit einer ersten Antriebsquelle (4),
b. einem zweiten Antrieb (6) zur Kopplung mit einer zweiten Antriebsquelle (21, 21'),
c. einem ersten Abtrieb (7) zur Kopplung mit einer oder mehreren Radachsen (18a, 18b) und/oder Rädern, **dadurch gekennzeichnet, dass** das Getriebe (3)
d. eine erste Schaltstufenwelle (10), die mit dem ersten Antrieb (5) und dem ersten Abtrieb (7) kraftschlüssig verbindbar ist und
e. eine zweite Schaltstufenwelle (11), die wahlweise und unabhängig von der ersten Schaltstufenwelle (10) mit dem ersten Antrieb (5) oder mit dem zweiten Antrieb (6) sowie mit dem ersten Abtrieb (7) kraftschlüssig verbindbar ist, aufweist.

2. Getriebe nach Anspruch 1, **dadurch gekennzeichnet, dass** die erste (10) und die zweite (11) Schaltstufenwelle gleich viele, insbesondere jeweils zwei, Schaltstufen (S1, S2, S3, S4) aufweisen.

3. Getriebe nach einem der vorhergehenden Ansprüche, **dadurch gekennzeichnet, dass** das Getriebe (3) einen zweiten Abtrieb (8) aufweist.

4. Getriebe nach einem der vorhergehenden Ansprüche, **dadurch gekennzeichnet, dass** der erste Antrieb (5) und/oder der zweite Antrieb (6) eine Antriebsquellenabschaltung (23a, 23b) aufweist.

5. Getriebe nach einem der vorhergehenden Ansprüche, **dadurch gekennzeichnet, dass** das Getriebe (3) eine Zapfwelle (9) aufweist, die mit dem ersten Antrieb (5) verbunden ist oder an diesen koppelbar ist.

6. Getriebe nach einem der vorhergehenden Ansprüche, **dadurch gekennzeichnet, dass** das Getriebe (3) ein Getriebegehäuse (14) mit einer Befestigungsstelle, insbesondere Anflanschstelle (13a, 13b), für die zweite Antriebsquelle (21, 21') und/oder mit einer Befestigungsstelle, insbesondere Anflanschstelle (13a, 13b), für eine Generatoreinheit (20, 20') aufweist.

7. Antriebseinheit (2) für eine fahrbare Arbeitsmaschine (1), **dadurch gekennzeichnet, dass** die Antriebseinheit (2) ein Getriebe (3) nach einem der vorhergehenden Ansprüche aufweist.

8. Antriebseinheit nach Anspruch 7, **dadurch gekennzeichnet, dass** an den zweiten Abtrieb (8) eine Generatoreinheit (20, 20'), insbesondere eine Hydraulikpumpe oder ein elektrischer Generator, gekoppelt ist.

9. Antriebseinheit nach Anspruch 7 oder 8, **dadurch gekennzeichnet, dass** an den ersten Antrieb (5) als erste Antriebsquelle (4) und/oder an den zweiten Antrieb (6) als zweite Antriebsquelle (21, 21') eine Verbrennungskraftmaschine, vorzugsweise ein Diesel-, Benzin- oder Gasmotor, ein Elektromotor oder ein Hydromotor gekoppelt ist.

10. Antriebseinheit nach einem der Ansprüche 7 bis 9, **dadurch gekennzeichnet, dass** die Generatoreinheit (20, 20'), die erste Antriebsquelle (4) und/oder die zweite Antriebsquelle (21, 21') über eine Modulationseinheit (22, 22a', 22b') an den zweiten Abtrieb (8), den ersten Antrieb (5) bzw. den zweiten Antrieb (6) gekoppelt ist.

11. Antriebseinheit nach einem der Ansprüche 7 bis 10, **dadurch gekennzeichnet, dass** der erste Antrieb (5) und/oder der erste Abtrieb (7) und/oder die Zapfwelle (9) eine Knickachse (17) aufweist.

12. Antriebseinheit nach einem der Ansprüche 7 bis 11, **dadurch gekennzeichnet, dass** der erste Abtrieb (7) umschaltbar mit einer Radachse (18a, 18b) oder mit wenigstens zwei Radachsen (18a, 18b) gekoppelt ist.

13. Antriebseinheit nach einem der Ansprüche 7 bis 12, **dadurch gekennzeichnet, dass** die Antriebseinheit (2) eine Steuereinheit (30) aufweist, die eingerichtet ist, in Abhängigkeit eines Betriebsmodus der Antriebseinheit (2) und/oder der Fahrgeschwindigkeit und/oder einer Drehzahl und/oder eines am ersten (5) und/oder zweiten (6) Antrieb angreifenden Drehmoments eine Schaltstufe (S1, S2, S3, S4) der ersten (10) oder der zweiten (11) Schaltstufenwelle zu wählen.

14. Antriebseinheit nach einem der Ansprüche 7 bis 13, **dadurch gekennzeichnet, dass** die erste Antriebsquelle (4) und/oder die zweite Antriebsquelle (21, 21') als Elektromotor ausgebildet ist, wobei der Elektromotor zumindest teilweise durch einen Akkumulator (25') gespeist wird.

## Claims

1. Transmission (3) for a driveable working machine (1), with:
a. a first drive (5) for coupling to a first drive source (4),
b. a second drive (6) for coupling to a second drive source (21, 21'),
c. a first output (7) for coupling to one or several wheel axles (18a, 18b) and/or wheels, **characterised in that** the transmission (3) has
d. a first switching step shaft (10), which may be connected to the first drive (5) and the first output (7) in a force-fitting way and
e. a second switching step shaft (11), which may be connected selectively and independently of the first switching step shaft (10) to the first drive (5) or the second drive (6) and the first output (7) in a force-fitting way.

2. Transmission according to claim 1, **characterised in that** the first (10) and the second (11) switching step shaft have the same, particularly two, switching steps (S1, S2, S3, S4).

3. Transmission according to one of the previous claims, **characterised in that** the transmission (3) has a second output (8).

4. Transmission according to one of the previous claims, **characterised in that** the first drive (5) and/or the second drive (6) has a drive source cut-off (23a, 23b).

5. Transmission according to one of the previous claims, **characterised in that** the transmission (3) has a power take-off shaft (9), which is connected to the first drive (5) or may be coupled to it.

6. Transmission according to one of the previous claims, **characterised in that** the transmission (3) has a gearbox (14) with a fastening point, particularly a flange mounting point (13a, 13b), for the second drive source (21, 21') and/or with a fastening point, particularly a flange mounting point (13a, 13b), for a generator unit (20, 20').

7. Drive unit (2) for a driveable working machine (1), **characterised in that** the drive unit (2) has a transmission (3) according to one of the previous claims.

8. Drive unit according to claim 7, **characterised in that** a generator unit (20, 20'), particularly a hydraulic pump or an electric generator, is coupled to the second output (8).

9. Drive unit according to claim 7 or 8, **characterised in that** a combustion engine, preferably a diesel, petrol or gas engine, an electric motor or a hydro motor, is coupled to the first drive (5) as a first drive source (4) and/or to the second drive (6) as a second drive source (21, 21').

10. Drive unit according to one of claims 7 to 9, **characterised in that** the generator unit (20, 20'), the first drive source (4) and/or the second drive source (21, 21') is coupled to the second output (8), the first drive (5) or the second drive (6) via a modulation unit (22, 22a', 22b').

11. Drive unit according to one of claims 7 to 10, **characterised in that** the first drive (5) and/or the first output (7) and/or the power take-off shaft (9) has a bending axis (17).

12. Drive unit according to one of claims 7 to 11, **characterised in that** the first output (7) is coupled to a wheel axle (18a, 18b) or at least two wheel axles (18a, 18b) in a switchable way.

13. Drive unit according to one of claims 7 to 12, **characterised in that** the drive unit (2) has a control unit (30), which is set up to select a switching step (S1, S2, S3, S4) of the first (10) or the second (11) switching step shaft, independently of an operating mode of the drive unit (2) and/or the driving speed and/or a speed and/or a torque acting on the first (5) and/or second (6) drive.

14. Drive unit according to one of claims 7 to 13, **characterised in that** the first drive source (4) and/or the second drive source (21, 21') is made as an electric motor, in which the electric motor is supplied at least partly by an accumulator (25').

## Revendications

1. Transmission (3) pour une machine de travail (1) mobile, avec :
a. un premier entraînement (5) pour le couplage avec une première source d'entraînement (4),
b. un second entraînement (6) pour le couplage avec une seconde source d'entraînement (21, 21'),
c. une première sortie (7) pour le couplage avec un ou plusieurs essieux de roue (18a, 18b) et/ou des roues, **caractérisée en ce que** la transmission (3) présente
d. un premier arbre de rapport de vitesse (10) qui peut être relié à force au premier entraînement (5) et à la première sortie (7) et
e. un second arbre de rapport de vitesse (11) qui peut être relié au choix et indépendamment du premier arbre de rapport de vitesse (10) au premier entraînement (5) ou au second entraînement (6) ainsi qu'à force à la première sortie (7).

2. Transmission selon la revendication 1, **caractérisée en ce que** le premier (10) et le second (11) arbres de rapport de vitesse présentent simultanément de nombreux, en particulier respectivement deux, rapports de vitesse (S1, S2, S3, S4).

3. Transmission selon l'une des revendications précédentes, **caractérisée en ce que** la transmission (3) présente une seconde sortie (8).

4. Transmission selon l'une des revendications précédentes, **caractérisée en ce que** le premier entraînement (5) et/ou le second entraînement (6) présente un arrêt de source d'entraînement (23a, 23b).

5. Transmission selon l'une des revendications précédentes, **caractérisée en ce que** la transmission (3) présente une prise de force (9) qui est reliée au premier entraînement (5) ou peut être couplée à celui-ci.

6. Transmission selon l'une des revendications précédentes, **caractérisée en ce que** la transmission (3) présente un boîtier de transmission (14) avec un point de fixation, en particulier point de bridage (13a, 13b), pour la seconde source d'entraînement (21, 21') et/ou avec un point de fixation, en particulier point de bridage (13a, 13b), pour une unité de générateur (20, 20').

7. Unité d'entraînement (2) pour une machine de travail (1) mobile, **caractérisée en ce que** l'unité d'entraînement (2) présente une transmission (3) selon l'une des revendications précédentes.

8. Unité d'entraînement selon la revendication 7, **caractérisée en ce qu'**une unité de générateur (20, 20'), en particulier une pompe hydraulique ou un générateur électrique, est couplée à la seconde sortie (8).

9. Unité d'entraînement selon la revendication 7 ou 8, **caractérisée en ce qu'**un moteur à combustion interne, de préférence un moteur diesel, essence ou à gaz, un moteur électrique ou un moteur hydraulique est couplé au premier entraînement (5) comme première source d'entraînement (4) et/ou au second entraînement (6) comme seconde source d'entraînement (21, 21').

10. Unité d'entraînement selon l'une des revendications 7 à 9, **caractérisée en ce que** l'unité de générateur (20, 20'), la première source d'entraînement (4) et/ou la seconde source d'entraînement (21, 21') est couplée par le biais d'une unité de modulation (22, 22a', 22b') à la seconde sortie (8), au premier entraînement (5) ou au second entraînement (6).

11. Unité d'entraînement selon l'une des revendications 7 à 10, **caractérisée en ce que** le premier entraînement (5) et/ou la première sortie (7) et/ou la prise de force (9) présente un axe de flambage (17).

12. Unité d'entraînement selon l'une des revendications 7 à 11, **caractérisée en ce que** la première sortie (7) est couplée de manière commutable à un essieu de roue (18a, 18b) ou à au moins deux essieux de roue (18a, 18b).

13. Unité d'entraînement selon l'une des revendications 7 à 12, **caractérisée en ce que** l'unité d'entraînement (2) présente une unité de commande (30) qui est aménagée afin de choisir en fonction d'un mode de fonctionnement de l'unité d'entraînement (2) et/ou de la vitesse de déplacement et/ou d'une vitesse de rotation et/ou d'un couple agissant sur le premier (5) et/ou second (6) entraînement un rapport de vitesse (S1, S2, S3, S4) du premier (10) ou du second (11) arbre de rapport de vitesse.

14. Unité d'entraînement selon l'une des revendications 7 à 13, **caractérisée en ce que** la première source d'entraînement (4) et/ou la seconde source d'entraînement (21, 21') est réalisée comme moteur électrique, dans laquelle le moteur électrique est alimenté au moins partiellement par un accumulateur (25').
